# EUROPEAN PATENT APPLICATION

(11) **EP 4 668 788 A1**
(43) Date of publication of application: **24.12.2025**
(21) Application number: 23921788.8
(22) Date of filing: 15.02.2023
(51) Int. Cl.: H04W 4/02, H04W 64/00

(54) **INFORMATION PROCESSING METHODS, SYSTEM AND APPARATUSES, COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/076283
(87) International publication number: WO 2024/168625

(57) **Abstract**

Provided in the embodiments of the present disclosure are information processing methods, system and apparatuses, a communication device and a storage medium. An information processing method is executed by a UE, the method comprising: sending to a core network device first time interval information of uplink transmission and downlink reception between the UE and a positioning node, the first time interval information being used for determining position information of the UE.

## Description

### FIELD

The present disclosure relates to, but is not limited to, the field of wireless communication technologies, and more particularly to a method, a system and an apparatus for processing information, a communication device, and a storage medium.

### BACKGROUND

In communication scenarios based on satellite communications, a significant propagation distance results in a significant timing deviation between uplink and downlink. Consequently, in a related art, a terminal is required to provide position information measured based on a global navigation satellite system (GNSS) to maintain uplink synchronization. However, due to a high-speed operation of a satellite during communication and positioning processes, there is a significant error in positioning.

### SUMMARY

Embodiments of the present disclosure provide a method, a system and an apparatuses for processing information, a communication device, and a storage medium.

A first aspect of embodiments of the present disclosure provides a method for processing information, performed by a user equipment (UE). The method includes transmitting first time interval information of uplink transmission and downlink reception between the UE and a positioning node to a core network device, in which the first time interval information is used to determine position information of the UE.

A second aspect of embodiments of the present disclosure provides a method for processing information, performed by a positioning node. The method includes transmitting second time interval information of downlink transmission and uplink reception between the positioning node and a UE to a core network device, in which the second time interval information is used to determine position information of the UE.

A third aspect of embodiments of the present disclosure provides a method for processing information, performed by a core network device. The method includes receiving first time interval information transmitted by a UE; receiving second time interval information transmitted by a positioning node; and determining position information of the UE based on the first time interval information and the second time interval information.

A fourth aspect of embodiments of the present disclosure provides a method for processing information, performed by an information processing system, and the information processing system includes a UE, a positioning node, and a core network device. The method includes: transmitting, by the UE to the core network device, first time interval information of uplink transmission and downlink reception between the UE and the positioning node; transmitting, by the positioning node to the core network device, second time interval information of downlink transmission and uplink reception between the UE and the positioning node; and receiving, by the core network device, the first time interval information and the second time interval information, and determining position information of the UE based on the first time interval information and the second time interval information.

A fifth aspect of embodiments of the present disclosure provides a system for processing information, and the system includes a UE, a positioning node, and a core network device. The UE is configured to perform one or more of the aforementioned technical solutions; the positioning node is configured to perform one or more of the aforementioned technical solutions; and the core network device is configured to perform one or more of the aforementioned technical solutions.

A sixth aspect of embodiments of the present disclosure provides an apparatus for processing information, applied to a UE. The apparatus includes a transmitting unit configured to transmit first time interval information of uplink transmission and downlink reception between the UE and a positioning node to a core network device, in which the first time interval information is used to determine position information of the UE.

A seventh aspect of embodiments of the present disclosure provides an apparatus for processing information, applied to a positioning node. The apparatus includes a transmitting unit configured to transmit second time interval information of downlink transmission and uplink reception between the positioning node and a UE to a core network device, in which the second time interval information is used to determine position information of the UE.

An eighth aspect of embodiments of the present disclosure provides an apparatus for processing information, applied to a core network device. The apparatus includes a processing unit, and the processing unit is configured to receive first time interval information transmitted by a UE, receive second time interval information transmitted by a positioning node, and determine position information of the UE based on the first time interval information and the second time interval information.

A ninth aspect of embodiments of the present disclosure provides a communication device. The communication device includes a processor, a transceiver, a memory, and an executable program stored in the memory and executable by the processor. The processor executes the executable program to perform the method for processing information according to any of the aforementioned embodiments.

A tenth aspect of embodiments of the present disclosure provides a computer storage medium, storing an executable program, in which a processor executes the executable program to implement the method for processing information according to any of the aforementioned embodiments.

The method for processing information provided by the embodiments of the present disclosure, performed by the UE, includes transmitting the first time interval information of uplink transmission and downlink reception between the UE and the positioning node to the core network device, in which the first time interval information is used to determine the position information of the UE. In this way, by providing the time interval information of uplink and downlink between the UE and the positioning node, the network side may more accurately determine the position information of the UE. For example, in a scenario of satellite communication, the time interval information may also reflect uplink and downlink delay between the UE and the positioning node (e.g., a satellite), improving the positioning accuracy of the UE by the network side.

It should be understood that the above general description and the following detailed description are merely illustrative and explanatory, and should not be construed as limiting the embodiments of the present disclosure.

### BRIEF DESCRIPTION OF THE DRAWINGS

The drawings herein are incorporated into the specification and form a part of the specification, show embodiments that comply with the present disclosure, and are used to explain the principles of the embodiments of the present disclosure together with the specification.
FIG. 1 shows a schematic diagram of a wireless communication system according to an illustrative embodiment.
FIG. 2 shows a schematic flowchart of a method for processing information according to an illustrative embodiment.
FIG. 3 shows a schematic diagram of a first time difference according to an illustrative embodiment.
FIG. 4 shows a schematic diagram of a second time difference according to an illustrative embodiment.
FIG. 5 shows a schematic flowchart of a method for processing information according to an illustrative embodiment.
FIG. 6 shows a schematic flowchart of a method for processing information according to an illustrative embodiment.
FIG. 7 shows a schematic flowchart of a method for processing information according to an illustrative embodiment.
FIG. 8 shows a schematic flowchart of a method for processing information according to an illustrative embodiment.
FIG. 9 shows a schematic diagram of a third time difference according to an illustrative embodiment.
FIG. 10 shows a schematic flowchart of a method for processing information according to an illustrative embodiment.
FIG. 11 shows a schematic flowchart of a method for processing information according to an illustrative embodiment.
FIG. 12 shows a schematic flowchart of a method for processing information according to an illustrative embodiment.
FIG. 13 shows a schematic block diagram of an apparatus for processing information according to an illustrative embodiment.
FIG. 14 shows a schematic block diagram of an apparatus for processing information according to an illustrative embodiment.
FIG. 15 shows a schematic block diagram of an apparatus for processing information according to an illustrative embodiment.
FIG. 16 shows a schematic block diagram of a terminal according to an illustrative embodiment.
FIG. 17 shows a schematic block diagram of a communication device according to an illustrative embodiment.

### DETAILED DESCRIPTION

Illustrative embodiments are described in detail here, and examples are shown in the accompanying drawings. When the following description refers to the accompanying drawings, unless specified otherwise, the same number in different accompanying drawings indicates the same or similar elements. The implementations described in the following illustrative embodiments are not representative of all implementations consistent with the embodiments of the present disclosure. Rather, they are only examples of devices and methods that are consistent with some aspects of the embodiments of the present disclosure

Terms used in the embodiments of the present disclosure are solely for the purpose of describing specific embodiments, and are not intended to limit the embodiments of the present disclosure. The singular forms "a", "the" and "this" used in the present disclosure are also intended to include plural forms, unless the context clearly indicates otherwise. It should also be understood that the term "and/or" used herein refers to and includes any or all possible combinations of one or more associated listed items.

It should be understood that, although terms such as "first" "second," and "third" may be used in the embodiments of the present disclosure to describe various types of information, such information shall not be limited by these terms. These terms are only used to distinguish the same type of information. For example, without departing from the scope of the embodiments of the present disclosure, first information may also be referred to as second information, and similarly, the second information may also be referred to as the first information. Depending on the context, the term "if" as used herein may be interpreted as "when" or "while" or "in response to determining".

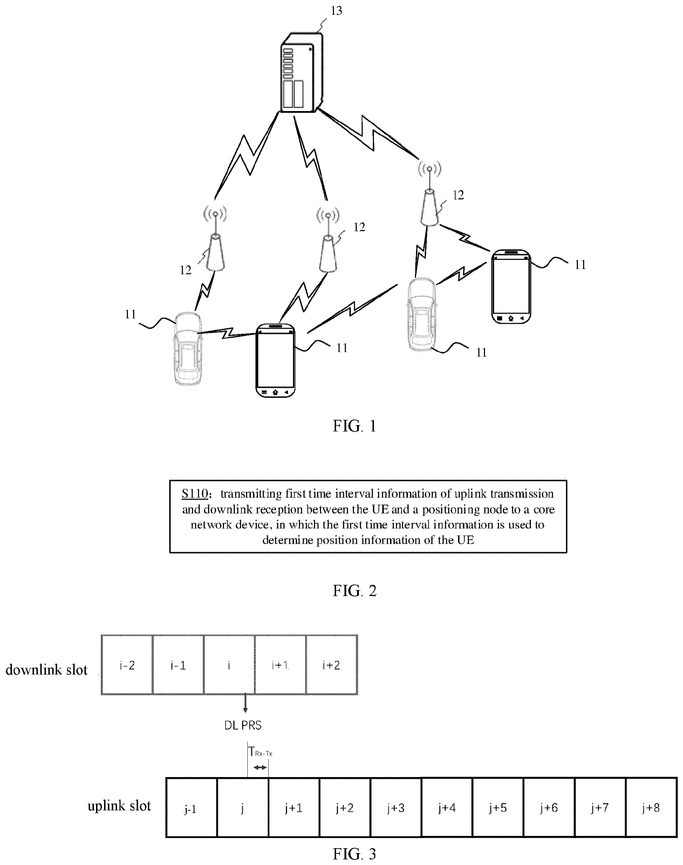

Referring to FIG. 1, FIG. 1 shows a schematic diagram of a wireless communication system provided by an embodiment of the present disclosure. As shown in FIG. 1, the wireless communication system is a communication system based on cellular mobile communication technologies. This wireless communication system may include a plurality of terminals 11 and a plurality of access devices 12.

The terminal 11 may refer to a device that provides voice and/or data connectivity to a user. The terminal 11 may communicate with one or more core networks via a radio access network (RAN). The terminal 11 may be an internet of things (IoT) terminal, such as a sensor device, a mobile phone (also known as a "cellular" phone), or a computer with the IoT terminal. For example, it may be a fixed device, a portable device, a pocket-sized device, a handheld device, a computer-integrated device, or an in-vehicle device. For example, a station (STA), a subscriber unit, a subscriber station, a mobile station, a mobile, a remote station, an access point, a remote terminal, an access terminal, a user device, a user agent, a user equipment (UE), or a user terminal. Alternatively, the terminal 11 may also be an unmanned aerial vehicle device. Alternatively, the terminal 11 may also be an in-vehicle device, such as an onboard computer with wireless communication capabilities or a wireless communication device connected to an onboard computer. Alternatively, the terminal 11 may also be a roadside device, such as a street lamp with wireless communication capabilities, a signal lamp, or other roadside devices.

The access device 12 may be a network node device in the wireless communication system. The wireless communication system may be a 4th generation mobile communication (4G) system, also known as a long-term evolution (LTE) system. Alternatively, the wireless communication system may be a 5th generation (5G) system, also known as a new radio (NR) system or a 5G NR system. Alternatively, the wireless communication system may be a next-generation system beyond the 5G system. An access network in the 5G system may be referred to as a new generation-radio access network (NG-RAN). Alternatively, the wireless communication system may be a machine-type communication (MTC) system.

The access device 12 may be an evolved NodeB (eNB) used in the 4G system. Alternatively, the access device 12 may be a next-generation NodeB (gNB) in the 5G system that adopts a centralized-distributed architecture. When the access device 12 adopts the centralized-distributed architecture, it typically includes a central unit (CU) and at least two distributed units (DUs). The central unit hosts protocol stacks for a packet data convergence protocol (PDCP) layer, a radio link control (RLC) layer, and a media access control (MAC) layer; the distributed unit hosts a physical (PHY) layer protocol stack. The specific implementation of the access device 12 is not limited in the embodiments of the present disclosure.

A wireless connection may be established between the access device 12 and the terminal 11 via a wireless air interface. In different implementations, the wireless air interface is a wireless air interface based on a 4th generation mobile communication network technology (4G) standard; alternatively, the wireless air interface is a wireless air interface based on a 5th generation mobile communication network technology (5G) standard, such as new radio; alternatively, the wireless air interface may also be a wireless air interface based on a next-generation mobile communication network technology standard beyond 5G.

Optionally, the wireless communication system may further include a network management device 13. The plurality of access devices 12 are respectively connected to the network management device 13. The network management device 13 may be a core network device in the wireless communication system, for example, the network management device 13 may be a mobility management entity (MME) in an evolved packet core (EPC) network. Alternatively, the network management device may also be other core network devices, such as a serving gateway (SGW), a public data network gateway (PGW), a policy and charging rules function (PCRF), or a home subscriber server (HSS). The implementation form of the network management device 13 is not limited in the embodiments of the present disclosure.

For example, the terminal 11 may be the UE in the embodiments of the present disclosure. For example, the UE may include, but not limited to, a mobile phone, a wearable device, a vehicle-mounted terminal, a road side unit (RSU), a smart home terminal, an industrial sensing device, and/or a medical device, etc. The access device 12 may be a positioning node (e.g., a base station) in the embodiments of the present disclosure. The network management device 13 may be the core network device in the embodiments of the present disclosure.

As shown in FIG. 2, embodiments of present disclosure provide a method for processing information, performed by a UE. This method includes:

in step S110, transmitting first time interval information of uplink transmission and downlink reception between the UE and a positioning node to a core network device, in which the first time interval information is used to determine position information of the UE.

In embodiments of the present disclosure, the positioning node may be a base station and/or a satellite, etc. The uplink transmission may include transmitting an uplink time unit to the positioning node, and the downlink reception may include receiving a downlink time unit from the positioning node. The time unit may be a subframe, a slot, or other time unit. The first time interval information may indicate a timing deviation between the uplink time unit and the downlink time unit. For example, the first time interval information may include a numeric count of subframes, a numeric count of slots, or a duration for the interval.

In an embodiment, in a case where the positioning node is the satellite, the downlink time unit for downlink reception may be a downlink subframe transmitted by a base station and forwarded by the positioning node, and the uplink time unit for uplink transmission may be transmitted to the base station via the positioning node.

In an embodiment, the UE may transmit the first time interval information to a core network device. For example, the core network device may be a location management function (LMF). The core network device may be configured to determine the position information of the UE based on the first time interval information.

In an embodiment, the first time interval information of uplink transmission and downlink reception between the UE and the positioning node may be first time interval information between a downlink time unit transmitted by the positioning node and an uplink time unit transmitted to the positioning node. The downlink time unit may be a time unit carrying a first target signal; and the uplink time unit may be a time unit closest to the downlink time unit and/or carrying a second target signal.

In an embodiment, the second target signal may be a signal corresponding to the first target signal, for example, the first target signal may be a downlink positioning reference signal (PRS) or a downlink channel state information-reference signal (CSI-RS); the second target signal may be an uplink channel sounding reference signal (SRS). The first target signal may be carried in the downlink time unit, and the second target signal may be carried in the uplink time unit. The first target signal and the second target signal may occur in pairs.

In an embodiment, the first time interval information includes a first time difference. Before step S110, the method may further include determining the first time difference based on a first time instant in a first downlink time unit received from the positioning node and a second time instant in a first uplink time unit transmitted by the UE. The first downlink time unit is used to transmit a first target signal, and the first uplink time unit is an uplink time unit closest to the first downlink time unit. For example, the first uplink time unit is a time unit closest in time to the first downlink time unit. The "closest to" may refer to "closest in time to", for example, time instants corresponding to time units are closest.

In an embodiment, the first time difference may indicate a time interval between the first time instant and the first uplink time unit. For example, the second time instant may be a start time instant or an end time instant of the first uplink time unit or a time instant of transmitting the second target signal. The first time difference may be a time interval from the first time instant to the end time instant or the start time instant of the first uplink time unit or the time instant of transmitting the second target signal.

In an embodiment, the first time instant may be a time instant for the UE to receive the first target signal in the first downlink time unit. The first time instant may be determined based on detection of a first path of the first downlink time unit or the first target signal in a multipath detection.

In an embodiment, the first target signal may be a PRS or a CSI-RS. The first downlink time unit may be a downlink time unit used by the positioning node to transmit the first target signal. The first time instant may be a time instant for the UE to receive the first target signal in the first downlink time unit. For example, the first time instant may be determined based on a reception symbol position of the first target signal.

In an embodiment, the first uplink time unit may be an uplink time unit with a transmission time instant closest to the first downlink time unit. For example, the first uplink time unit may be an uplink time unit with a transmission time instant located before and closest to the first downlink time unit, or it may also be an uplink time unit with a transmission time instant located after and closest to the first downlink time unit.

The transmission time instant may be the second time instant in the first uplink time unit. The second time instant may be the start time instant corresponding to transmission of the first uplink time unit. For example, as shown in FIG. 3, the first downlink time unit is a subframe i, the first uplink time unit is a subframe j, and the first uplink time unit is the subframe j with a transmission time instant closest to the first time instant of the subframe i. The first time difference is a time difference T_{RX - TX} between a time instant of receiving the downlink (DL) PRS and the end time instant of the first uplink time unit.

In an embodiment, the method may also include receiving indication information of the first downlink time unit transmitted by the positioning node, and/or transmitting indication information of the first uplink time unit to the positioning node. Additionally, the UE may also transmit the indication information of the first uplink time unit to the core network device. For example, in a case where the positioning node and the UE transmits respectively, the UE transmits the indication information of the first uplink time unit to the core network device, and the positioning node transmits the indication information of the first downlink time unit to the core network device.

In an embodiment, after receiving the indication information of the first downlink time unit transmitted by the positioning node, the method may further include transmitting the indication information of the first downlink time unit and the indication information of the first uplink time unit to the core network device. The indication information may include an identifier of a time unit. For example, in a case where the time unit is a subframe, the indication information may be a subframe number, etc., for the core network device to accurately locate the first downlink time unit and/or the first uplink time unit.

The method may include transmitting a processing result determined based on the indication information of the first downlink time unit and the indication information of the first uplink time unit to the core network device. The processing result may be used by the core network device to determine the position information of the UE. Alternatively, the core network device may also determine the processing result based on the indication information of the first downlink time unit and the indication information of the first uplink time unit.

In an embodiment, after transmitting the indication information of the first uplink time unit to the positioning node, the positioning node transmits the indication information of the first uplink time unit together with the indication information of the first downlink time unit to the core network device.

In an embodiment, the method may further include determining a second time difference, and the second time difference is used to indicate a time difference between a second downlink time unit for receiving a downlink pilot and a second uplink time unit for transmitting an uplink pilot. Correspondingly, step S110 may include transmitting the first time difference and the second time difference.

In an embodiment, the second downlink time unit may be a time unit different from the first downlink time unit. For example, the first downlink time unit and the second downlink time unit are respectively used to transmit different signals. For example, the first downlink time unit is used by the positioning node to transmit a first PRS, and the second downlink time unit is used by the positioning node to transmit a second PRS. Alternatively, the second downlink time unit may also be the same time unit as the first downlink time unit. For example, the downlink pilot is a downlink PRS or a downlink CSI-RS. The second uplink time unit may be an uplink time unit used to transmit the uplink pilot. For example, the second uplink time unit may be used to transmit an uplink pilot corresponding to the downlink pilot. For example, the uplink pilot may be an uplink SRS, etc.

In an embodiment, the second uplink time unit is an uplink time unit closest to the second downlink time unit and used to transmit the uplink pilot, in which "closest to the second downlink time unit" may refer to being closest to a transmission time instant of the second downlink time unit, or having a shortest time interval from the second downlink time unit, such as having smallest numeric counts of slots or smallest numeric counts of intervening subframes from the second downlink time unit.

In an embodiment, the second uplink time unit may be a time unit located before the second downlink time unit, closest to the second downlink time unit and used to transmit the uplink pilot. Alternatively, the second uplink time unit may be a time unit located after the second downlink time unit, closest to the second downlink time unit and used to transmit the uplink pilot.

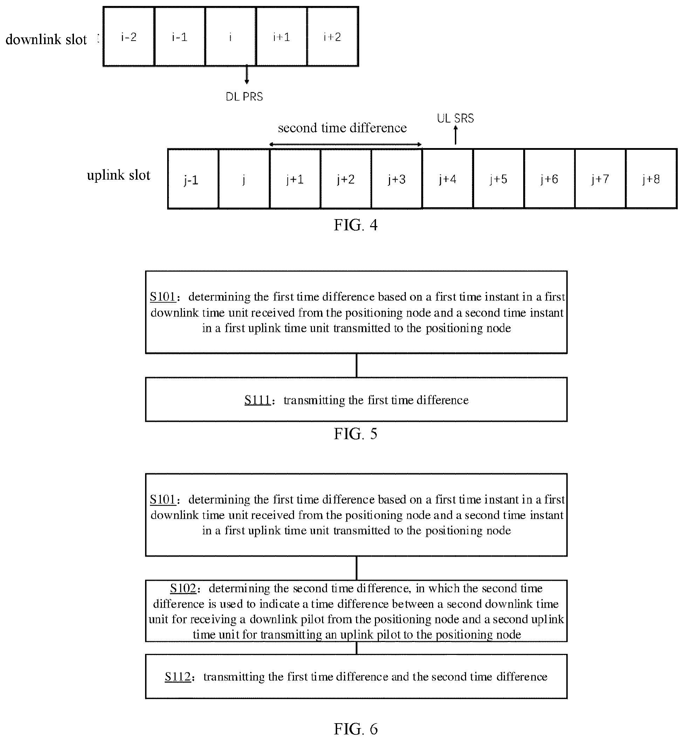

For example, as shown in FIG. 4, the second downlink time unit for receiving the downlink pilot (e.g., the DL PRS) is a subframe i, and the second uplink time unit closest to the subframe i and used to transmit the uplink pilot (e.g., the uplink (UL) SRS) is a subframe j+4. The second time difference may be a numeric count of intervening subframes and/or a numeric count of intervening slots between the second downlink time unit and the second uplink time unit.

In an embodiment, the second time difference may be the numeric count of intervening subframes and/or the numeric count of intervening slots between the second downlink time unit and the second uplink time unit. For example, as shown in FIG. 4, in response to determining that the second uplink time unit is located after the second downlink time unit, the second time difference may be the numeric count of subframes and/or the numeric count of slots after the second downlink time unit and before the second uplink time unit, i.e., 3 subframes; in response to determining that the second uplink time unit is located before the second downlink time unit, the second time difference may be the numeric count of subframes and/or the numeric count of slots after the second uplink time unit and before the second downlink time unit. The numeric count of subframes is an integer, and the numeric count of slots is also an integer.

The numeric count of slots may be determined based on the numeric count of subframes. Each subframe may include a predefined numeric count of slots, for example, each subframe includes 2, 4, or 8 slots. In this way, the second time difference serves as auxiliary information for correcting an error in the first time difference. The determination of the second time difference only requires identifying subframes where the first target signal and the second target signal are located, without determining the specific time instant of receiving the first target signal and the specific time instant of transmitting the second target signal, thus reducing the amount of computation and improving efficiency.

In an embodiment, determining the second time difference may also include determining a target set according to a predefined rule or configuration information indicated by the core network device, and determining a target value in the target set as the second time difference. For example, in response to the predefined rule or the configuration information including indication information, based on the indication information, the target value is determined in the target set according to subcarrier spacing information, and transmitted to the core network device as the second time difference. The indication information is used to instruct the UE to determine the target value with reference to the subcarrier spacing information.

The indication information included in the predefined rule or the configuration information may be information such as an instruction or a command. For example, in a case where the UE determines that the predefined rule or the configuration information includes a predefined instruction, it determines the target value in the target set according to the subcarrier spacing information.

In an embodiment, determining the target value in the target set according to the subcarrier spacing information may include determining the target value in the target set according to the subcarrier spacing information and a predefined ratio. For example, in a case where the predefined ratio is 2 times, the target value may be 2 times a subcarrier spacing value, etc.

In an embodiment, the second downlink time unit may be the same as or different from the first downlink time unit; and the second uplink time unit may be the same as or different from the first uplink time unit.

In an embodiment, the method may also include receiving indication information of the second downlink time unit transmitted by the positioning node, and/or transmitting indication information of the second uplink time unit to the positioning node. The method may further include transmitting the indication information of the second uplink time unit to the core network device. For example, in a case where the positioning node and the UE transmits respectively, the UE transmits the indication information of the second uplink time unit to the core network device, and the positioning node transmits the indication information of the second downlink time unit to the core network device.

In an embodiment, after receiving the indication information of the second downlink time unit transmitted by the positioning node, the method may further include transmitting the indication information of the second downlink time unit and the indication information of the second uplink time unit to the core network device.

The method may include transmitting a processing result determined based on the indication information of the second downlink time unit and the indication information of the second uplink time unit to the core network device. The processing result may be used by the core network device to determine the position information of the UE. Alternatively, the core network device may also determine the processing result based on the indication information of the second downlink time unit and the indication information of the second uplink time unit.

In an embodiment, transmitting the indication information of the second uplink time unit may include transmitting the indication information of the second uplink time unit to the positioning node. The indication information of the second downlink time unit may be received from the positioning node. For example, the indication information of the second uplink time unit may be transmitted to the positioning node, and be forwarded by the positioning node to the core network device.

In an embodiment, after receiving the indication information of the second downlink time unit transmitted by the positioning node, the indication information of the second downlink time unit may be transmitted to the core network device together with the indication information of the second uplink time unit. Alternatively, the indication information of the second uplink time unit is transmitted to the positioning node, and then the positioning node transmits both the indication information of the second uplink time unit and the indication information of the second downlink time unit to the core network device.

In an embodiment, the first time interval information is used by the core network device to determine the position information of the UE through manners such as a multi-round-trip time (multi-RTT).

In this way, the first time difference may reflect the time interval between the UE-side downlink time unit and the adjacent uplink time unit. The second time difference, such as the numeric count of subframes or slots, may reflect a time interval scale of uplink and downlink between the UE and the positioning node based on the target signal. Therefore, the second time difference may correct the error of the first time difference, thus more comprehensively reflecting the time interval of uplink and downlink between the UE and the positioning node, and facilitating the network side in determining the position information of the UE based on the first time interval information.

In an embodiment, the first time interval information includes a third time difference. Correspondingly, the method further includes determining the third time difference based on a first time instant in a first downlink time unit received from the positioning node and a third time instant in a third uplink time unit transmitted by the UE.

The first downlink time unit is used to transmit a first target signal, and the third uplink time unit is an uplink time unit closest to the first downlink time unit and used to transmit a second target signal. The third uplink time unit may be an uplink time unit used to transmit the second target signal and with a transmission time instant closest to the first downlink time unit. The transmission time instant may be the third time instant, and the third time instant may be a time instant for the UE to transmit the second target signal in the third uplink time unit. For example, the third time instant may be determined according to a transmission symbol position of the second target signal in the third uplink time unit.

In an embodiment, the third uplink time unit may be an uplink time unit used to transmit the second target signal and with a transmission time instant located before and closest to the first downlink time unit, or it may be an uplink time unit used to transmit the second target signal and with a transmission time instant located after and closest to the first downlink time unit.

In an embodiment, the third uplink time unit may be the same as or different from the first uplink time unit.

In an embodiment, the first time instant may be a time instant for the UE to receive the first target signal in the first downlink time unit. The third time instant may be a time instant for the UE to transmit the second target signal in the third uplink time unit. The third time difference may be a duration between the first time instant and the third time instant. For example, as shown in FIG. 5, the first downlink time unit is a subframe i, the first time instant is a time instant of receiving a downlink (DL) PRS; the third uplink time unit is a subframe j+4, and the third time instant is a time instant of transmitting an uplink (UL) SRS. In this way, the third time difference may reflect the time interval of uplink and downlink between the UE and the positioning node based on the target signal, thus enabling the network side to determine the position information of the UE through manners such as the multi-RTT corresponding to the target signal, and reducing errors caused by high-speed movement of the positioning node.

In an embodiment, the method may also include: receiving indication information of the first downlink time unit transmitted by the positioning node, and/or transmitting indication information of the third uplink time unit to the positioning node. The UE may also transmit the indication information of the third uplink time unit to the core network device. For example, in a case where the positioning node and the UE transmits respectively, the UE transmits the indication information of the third uplink time unit to the core network device, and the positioning node transmits the indication information of the first downlink time unit to the core network device.

In an embodiment, after receiving the indication information of the first downlink time unit transmitted by the positioning node, the method may further include transmitting the indication information of the first downlink time unit and the indication information of the third uplink time unit to the core network device.

The method may include transmitting a processing result determined based on the indication information of the first downlink time unit and the indication information of the third uplink time unit to the core network device. The processing result may be used by the core network device to determine the position information of the UE. Alternatively, the core network device may also determine the processing result based on the indication information of the first downlink time unit and the indication information of the third uplink time unit.

In an embodiment, after transmitting the indication information of the third uplink time unit to the positioning node, the positioning node transmits both the indication information of the third uplink time unit and the indication information of the first downlink time unit to the core network device.

In an embodiment, the indication information of the time unit may include a subframe identifier, such as a subframe number and other information, to enable the core network device to accurately locate the first downlink time unit and/or the third uplink time unit.

In this way, by providing the first time interval information of uplink and downlink between the UE and the positioning node, the network side may more accurately determine the position information of the UE. For example, in a scenario of satellite communication, the first time interval information may also reflect uplink and downlink delay between the UE and the positioning node (e.g., a satellite), improving the positioning accuracy of the UE by the network side.

It should be noted that the technical features described in the aforementioned embodiments may be arbitrarily combined or reordered without conflict, to form new method technical solutions.

It should be noted that those skilled in the art will appreciate that the methods provided by embodiments of the present disclosure may be implemented independently, or may also be implemented in conjunction with some methods in embodiments of the present disclosure and other embodiments or some methods in the related art.

In some embodiments, as shown in FIG. 5, the first time interval information includes a first time difference;

The method further includes:
in step S101, determining the first time difference based on a first time instant in a first downlink time unit received from the positioning node and a second time instant in a first uplink time unit transmitted to the positioning node.

The first downlink time unit is used to transmit a first target signal, and the first uplink time unit is an uplink time unit closest to the first downlink time unit.

Step S110 may include:
in step S111, transmitting the first time difference.

In an embodiment, the first time instant may be a time instant of receiving the first target signal. The first time instant may be determined based on detection of a first path of the first downlink time unit or the first target signal in a multipath detection.

In an embodiment, the first target signal may be a PRS or a CSI-RS. The first downlink time unit may be a downlink time unit used by the positioning node to transmit the first target signal. The first time instant may be a time instant for the UE to receive the first target signal in the first downlink time unit. For example, the first time instant may be determined based on a reception symbol position of the first target signal.

In an embodiment, the first uplink time unit may be an uplink time unit with a transmission time instant closest to the first downlink time unit. For example, the first uplink time unit may be an uplink time unit with a transmission time instant located before and closest to the first downlink time unit, or it may also be an uplink time unit with a transmission time instant located after and closest to the first downlink time unit.

The transmission time instant may be the second time instant in the first uplink time unit. The second time instant may be a start time instant corresponding to transmission of the first uplink time unit. For example, the first time difference may be a time difference between a time instant of receiving the downlink PRS and the start time instant of the first uplink time unit.

It should be noted that for descriptions of content that is repeated or corresponds to other embodiments, please refer to the relevant parts in the aforementioned embodiments (e.g., step S110), which will not be repeated here.

In some embodiments, as shown in FIG. 6, the method further includes:
in step S102, determining a second time difference, in which the second time difference is used to indicate a time difference between a second downlink time unit for receiving a downlink pilot from the positioning node and a second uplink time unit for transmitting an uplink pilot to the positioning node.

Step S110 may include:
in step S112, transmitting the first time difference and the second time difference.

In an embodiment, the second time difference is indicated by a numeric count of subframes and/or a numeric count of slots.

In an embodiment, the downlink pilot includes a downlink PRS or a downlink CSI-RS; and/or the uplink pilot includes an uplink SRS.

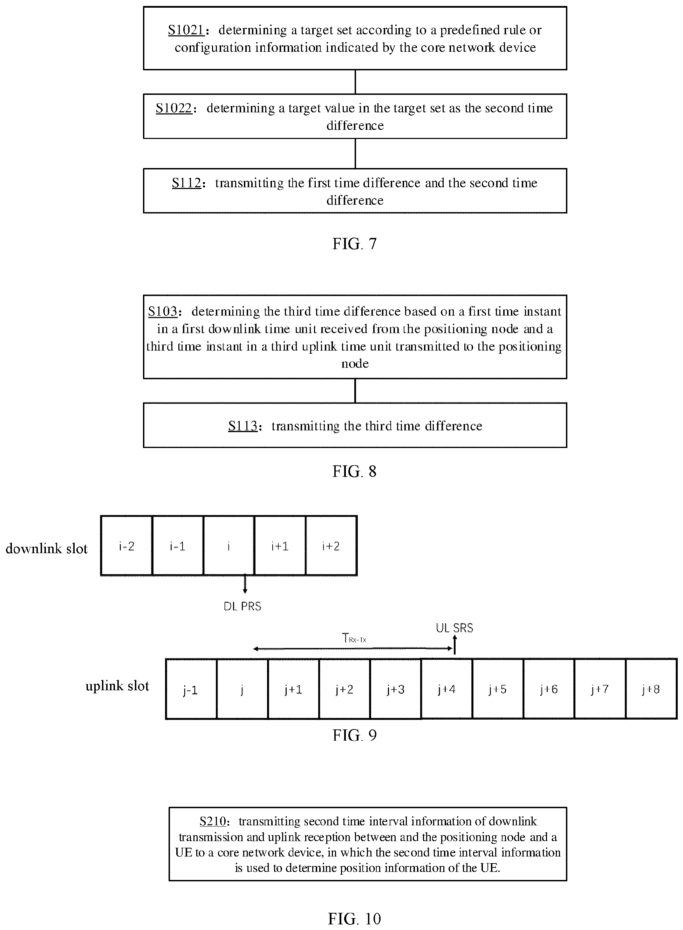

In an embodiment, as shown in FIG. 7, step S102 may include:
in step S1021, determining a target set according to a predefined rule or configuration information indicated by the core network device; and
in step S1022, determining a target value in the target set as the second time difference.

In an embodiment, before step S1022, the method further includes: determining whether the predefined rule or the configuration information indicated by the core network device includes indication information; and determining the target value in the target set according to subcarrier spacing information in response to that the predefined rule or the configuration information indicated by the core network device includes the indication information.

In this way, without requiring determination of subframe positions and the numeric count of intervening subframes corresponding to the second time difference, the second time difference is determined based on the subcarrier spacing information and the like, which may further improve efficiency. Moreover, the subcarrier spacing is related to the uplink and downlink transmission between the UE and the positioning node, so that the second time difference determined based on the subcarrier spacing may better conform to characteristics of the uplink and downlink transmission, improving the accuracy of the second time difference in the scenario of satellite communication.

In an embodiment, the second downlink time unit may be a time unit different from the first downlink time unit. For example, the first downlink time unit and the second downlink time unit are respectively used to transmit different signals. For example, the first downlink time unit is used by the positioning node to transmit a first PRS, and the second downlink time unit is used by the positioning node to transmit a second PRS. Alternatively, the second downlink time unit may also be the same time unit as the first downlink time unit. For example, the downlink pilot is the downlink PRS or the downlink CSI-RS. The second uplink time unit may be an uplink time unit for transmitting the uplink pilot. For example, the second uplink time unit may be used to transmit an uplink pilot corresponding to the downlink pilot. For example, the uplink pilot may be the uplink SRS, etc.

In an embodiment, the second uplink time unit is an uplink time unit closest to the second downlink time unit and used to transmit the uplink pilot, in which "closest to the second downlink time unit" may refer to being closest to a transmission time of the second downlink time unit, or having a shortest time interval from the second downlink time unit, such as having smallest numeric counts of intervening slots or smallest numeric counts of intervening subframes from the second downlink time unit.

In an embodiment, the second uplink time unit may be a time unit located before the second downlink time unit, closest to the second downlink time unit and used to transmit the uplink pilot. Alternatively, the second uplink time unit may be a time unit located after the second downlink time unit, closest to the second downlink time unit and used to transmit the uplink pilot.

In an embodiment, the second time difference may be the numeric count of intervening subframes and/or the numeric count of intervening slots between the second downlink time unit and the second uplink time unit. For example, in response to determining that the second uplink time unit is located after the second downlink time unit, the second time difference may be the numeric count of subframes and/or the numeric count of slots after the second downlink time unit and before the second uplink time unit; in response to determining that the second uplink time unit is located before the second downlink time unit, the second time difference may be the numeric count of subframes and/or the numeric count of slots after the second uplink time unit and before the second downlink time unit. The numeric count of subframes is an integer, and the numeric count of slots is also an integer.

The numeric count of slots may be determined based on the numeric count of subframes. Each subframe may include a predefined numeric count of slots, for example, each subframe includes 2, 4, or 8 slots. In this way, the second time difference serves as auxiliary information for correcting an error in the first time difference. The determination of the second time difference only requires identifying subframes where the first target signal and the second target signal are located, without determining the specific time instant of receiving the first target signal and the specific time instant of transmitting the second target signal, thus reducing the amount of computation and improving efficiency.

It should be noted that for descriptions of content that is repeated or corresponds to other embodiments, please refer to the relevant parts in the aforementioned embodiments (e.g., step S110), which will not be repeated here.

In some embodiments, as shown in FIG. 8, the first time interval information includes a third time difference.

The method further includes:
in step S103, determining the third time difference based on a first time instant in a first downlink time unit received from the positioning node and a third time instant in a third uplink time unit transmitted to the positioning node.

The first downlink time unit is used to transmit a first target signal; and the third uplink time unit is a time unit used to transmit a second target signal and closest to the first downlink time unit.

Step S110 may include:
in step S113, transmitting the third time difference.

In an embodiment, the first target signal includes a PRS or a CSI-RS.

The first downlink time unit is used to transmit the first target signal, and the third uplink time unit is an uplink time unit used to transmit the second target signal and with a transmission time instant closest to the first downlink time unit. The transmission time instant of the third uplink time unit may be the third time instant, and the third time instant may be a time instant of transmitting the second target signal in the third uplink time unit. For example, the third time instant may be determined according to a transmission symbol position of the second target signal in the third uplink time unit.

In an embodiment, the first time instant is a time instant of receiving the first target signal in the first downlink time unit; the third time instant may be a time instant of transmitting the second target signal in the third uplink time unit. For example, the third time instant may be determined based on a transmission symbol position corresponding to the second target signal carried in the third uplink time unit.

In an embodiment, the third uplink time unit may be an uplink time unit used to transmit the second target signal and with a transmission time instant located before and closest to the first downlink time unit, or it may be an uplink time unit used to transmit the second target signal and with a transmission time instant located after and closest to the first downlink time unit.

In an embodiment, the first time instant may be a time instant of receiving the first target signal. The third time instant may be a time instant of transmitting the second target signal. The third time difference may be a duration between the first time instant and the third time instant. For example, as shown in FIG. 9, the first downlink time unit is a subframe i, and the first time instant is a time instant of receiving a downlink (DL) PRS in the subframe i. The third uplink time unit is a subframe j+4, and the third time instant is a time instant of transmitting an uplink (UL) SRS in the subframe j+4. The third time difference T_{RX-TX} is a duration between the first time instant and the third time instant.

In this way, the third time difference may reflect the time interval of uplink and downlink between the UE and the positioning node based on the target signal, thus enabling the network side to determine the position information of the UE through manners such as the multi-RTT corresponding to the target signal, and reducing errors caused by high-speed movement of the positioning node.

It should be noted that for descriptions of content that is repeated or corresponds to other embodiments, please refer to the relevant parts in the aforementioned embodiments (e.g., step S110), which will not be repeated here.

It should be noted that the technical features described in the aforementioned embodiments may be arbitrarily combined or reordered without conflict, to form new method technical solutions.

It should be noted that those skilled in the art will appreciate that the methods provided by embodiments of the present disclosure may be implemented independently, or may also be implemented in conjunction with some methods in embodiments of the present disclosure and other embodiments or some methods in the related art.

As shown in FIG. 10, embodiments of present disclosure provide a method for processing information, performed by a positioning node. This method includes:
in step S210, transmitting second time interval information of downlink transmission and uplink reception between the positioning node and a UE to a core network device, in which the second time interval information is used to determine position information of the UE.

In embodiments of the present disclosure, the positioning node may be a base station or a satellite.

In an embodiment, the second time interval information includes a fourth time difference.

The method further includes:
determining the fourth time difference based on a fourth time instant in a first downlink time unit transmitted to a UE and a fifth time instant in a first uplink time unit received from the UE, in which the first uplink time unit is used to receive a second target signal, and the first downlink time unit is a downlink time unit closest to the first uplink time unit. The second target signal may be an SRS, and the first downlink time unit is a downlink unit closest to the first uplink time unit for receiving the SRS. The "closest to" may refer to "closest in time to", for example, time instants corresponding to time units are closest.

The fourth time difference may indicate a time interval between the first downlink time unit and the fifth time instant. The fifth time instant may be a time instant for the positioning node to receive the second target signal in the first uplink time unit, for example, the fifth time instant may be determined according to a reception symbol position of the second target signal. The first downlink time unit is a downlink time unit closest to the fifth time instant in the first uplink time unit. The fourth time instant may be a start time instant or an end time instant of the first downlink time unit, or a time instant for the positioning node to transmit a first target signal in the first downlink time unit. For example, the first target signal may be a PRS or a CSI-RS, etc., and the second target signal may be a SRS, etc.

In an embodiment, the second time interval information includes a fourth time difference. Before step S210, the method further includes determining the fourth time difference based on a fourth time instant in a first downlink time unit transmitted to the UE and a fifth time instant in a first uplink time unit received from the UE. The first uplink time unit is used to receive a second target signal; and the first downlink time unit is a downlink time unit closest to the first uplink time unit.

In an embodiment, the fourth time instant may be a time instant for the positioning node to transmit a first target signal in the first downlink time unit.

In an embodiment, the first target signal may be a PRS or a CSI-RS. The first downlink time unit may be a downlink time unit used by the positioning node to transmit the first target signal. The fourth time instant is a time instant for the positioning node to transmit the first target signal in the first downlink time unit. For example, the fourth time instant may be determined based on a transmission symbol position of the first target signal.

In an embodiment, the first downlink time unit may be a downlink time unit with a transmission time instant closest to the first uplink time unit. For example, the first downlink time unit may be a downlink time unit with a transmission time instant located before and closest to the first uplink time unit, or it may also be a downlink time unit with a transmission time instant located after and closest to the first uplink time unit.

In an embodiment, the method may further include determining a fifth time difference; and the fifth time difference is used to indicate a time difference between a second downlink time unit for transmitting a downlink pilot and a second uplink time unit for receiving an uplink pilot. Correspondingly, step S110 may include transmitting the fourth time difference and the fifth time difference.

In an embodiment, the second downlink time unit may be a time unit different from the first downlink time unit. For example, the first downlink time unit and the second downlink time unit are respectively used to transmit different signals. For example, the first downlink time unit is used by the positioning node to transmit a first PRS, and the second downlink time unit is used by the positioning node to transmit a second PRS. Alternatively, the second downlink time unit may also be the same time unit as the first downlink time unit. For example, the downlink pilot is a downlink PRS or a downlink CSI-RS. The second uplink time unit may be an uplink time unit used to transmit the uplink pilot. For example, the second uplink time unit may be used to transmit an uplink pilot corresponding to the downlink pilot. For example, the uplink pilot may be an uplink SRS, etc.

In an embodiment, the second uplink time unit is a time unit closest to the second downlink time unit and used to receive the uplink pilot, in which "closest to the second downlink time unit" may refer to being closest to a reception time of the second downlink time unit, or having a shortest time interval from the second downlink time unit, such as having smallest numeric counts of intervening slots or smallest numeric counts of intervening subframes from the second downlink time unit.

In an embodiment, the second uplink time unit may be a time unit located before the second downlink time unit, closest to the second downlink time unit and used to receive the uplink pilot. Alternatively, the second uplink time unit may be a time unit located after the second downlink time unit, closest to the second downlink time unit and used to receive the uplink pilot.

In an embodiment, the fifth time difference may be the numeric count of intervening subframes and/or the numeric count of intervening slots between the second downlink time unit and the second uplink time unit. For example, in response to determining that the second uplink time unit is located after the second downlink time unit, the fifth time difference may be the numeric count of subframes and/or the numeric count of slots after the second downlink time unit and before the second uplink time unit; in response to determining that the second uplink time unit is located before the second downlink time unit, the fifth time difference may be the numeric count of subframes and/or the numeric count of slots after the second uplink time unit and before the second downlink time unit. The numeric count of subframes is an integer, and the numeric count of slots is also an integer.

The numeric count of slots may be determined based on the numeric count of subframes. Each subframe may include a predefined numeric count of slots, for example, each subframe includes 2, 4, or 8 slots. In this way, the fifth time difference serves as auxiliary information for correcting an error in the fourth time difference. The determination of the fifth time difference only requires identifying subframes where the first target signal and the second target signal are located, without determining the specific time instant of receiving the first target signal and the specific time instant of transmitting the second target signal, thus reducing the amount of computation and improving efficiency.

In an embodiment, determining the fifth time difference may also include determining a target set according to a predefined rule or configuration information indicated by the core network device, and determining a target value in the target set as the fifth time difference. For example, in response to the predefined rule or the configuration information including indication information, based on the indication information, the target value is determined in the target set according to subcarrier spacing information, and transmitted to the core network device as the fifth time difference. The indication information is used to instruct the UE to determine the target value with reference to the subcarrier spacing information. For example, the indication information may information such as a command or an instruction for the UE to determine whether to determine the target value in the target set according to the subcarrier spacing information.

In an embodiment, determining the target value in the target set according to the subcarrier spacing information may include determining the target value in the target set according to the subcarrier spacing information and a predefined ratio. For example, in a case where the predefined ratio is 2 times, the target value may be 2 times a subcarrier spacing value, etc.

In an embodiment, the second time interval information is used by the core network device to determine the position information of the UE through manners such as a multi-round-trip time (multi-RTT).

In this way, the fourth time difference may reflect the time interval between the positioning node-side downlink time unit and the adjacent uplink time unit. The fifth time difference, such as the numeric count of subframes or slots, may reflect a time interval scale of uplink and downlink between the UE and the positioning node based on the target signal. Therefore, the fifth time difference may correct the error of the fourth time difference, thus more comprehensively reflecting the time interval of uplink and downlink between the UE and the positioning node, and facilitating the network side in determining the position information of the UE based on the second time interval information.

In an embodiment, the second time interval information includes a sixth time difference. Correspondingly, the method further includes determining the sixth time difference based on a fourth time instant in a first downlink time unit transmitted to the UE and a sixth time instant in a third uplink time unit received from the UE.

The first downlink time unit is used to transmit a first target signal, and the first downlink time unit is a downlink time unit used to transmit the first target signal and with a transmission time instant closest to the third uplink time unit. The fourth time instant may be a time instant of transmitting the first target signal in the first downlink time unit, for example, the fourth time instant may be determined according to a transmission symbol position of the first target signal. A reception time instant of the third uplink time unit may be the sixth time instant, and the sixth time instant may be a time instant for the positioning node to receive a second target signal in the third uplink time unit. For example, the sixth time instant may be determined according to a reception symbol position of the second target signal in the third uplink time unit.

In an embodiment, the first downlink time unit may be a downlink time unit used to transmit the first target signal and with a transmission time instant located before and closest to the third uplink time unit, or it may be a downlink time unit used to transmit the first target signal and with a transmission time instant located after and closest to the third uplink time unit.

In an embodiment, the fourth time instant may be a time instant for the positioning node to transmit the first target signal in the first downlink time unit. The sixth time instant may be a time instant for the positioning node to receive the second target signal in the third uplink time unit. The sixth time difference may be a duration between the fourth time instant and the sixth time instant. For example, the fourth time instant is a time instant of receiving a downlink (DL) PRS; the sixth time instant is a time instant of transmitting an uplink (UL) SRS. In this way, the sixth time difference may reflect the time interval of uplink and downlink between the UE and the positioning node based on the target signal, thus enabling the network side to determine the position information of the UE through manners such as the multi-RTT corresponding to the target signal, and reducing errors caused by high-speed movement of the positioning node.

In an embodiment, the method further includes:
transmitting indication information of the first downlink time unit to the UE, and/or receiving indication information of the first uplink time unit transmitted by the UE.

The method further includes:
transmitting the indication information of the first downlink time unit and the indication information of the first uplink time unit to the core network device.

Transmitting the indication information of the first downlink time unit may refer to transmitting the indication information of the first downlink time unit to the UE; and receiving the indication information of the first uplink time unit may refer to receiving the indication information of the first uplink time unit transmitted by the UE.

In an embodiment, the indication information may include a subframe identifier, such as a subframe number and other information, to enable the core network device to accurately locate the first downlink time unit and/or the first uplink time unit.

In an embodiment, the second time interval information further includes a fifth time difference.

The method further includes:
determining the fifth time difference, in which the fifth time difference is used to indicate a time difference between a second downlink time unit for transmitting a downlink pilot and a second uplink time unit for receiving an uplink pilot.

In an embodiment, the fifth time difference is indicated by a numeric count of sub frames and/or a numeric count of slots.

In an embodiment, the fifth time difference may indicate a numeric count of subframes and/or a numeric count of slots between the second downlink time unit for the positioning node to transmit the downlink pilot and the second uplink time unit for the positioning node to receive the uplink pilot.

In an embodiment, the downlink pilot includes a downlink PRS or a downlink CSI-RS; and/or the uplink pilot includes an uplink SRS.

In an embodiment, determining the fifth time difference may include: determining a target set according to a predefined rule or configuration information indicated by the core network device; and determining a target value in the target set as the fifth time difference.

In an embodiment, before determining the target value in the target set as the fifth time difference, the method may further include: determining whether the predefined rule or the configuration information indicated by the core network device includes indication information; and determining the target value in the target set according to subcarrier spacing information in response to the predefined rule or the configuration information indicated by the core network device including the indication information.

In an embodiment, the method further includes:
transmitting indication information of the second downlink time unit to the UE, and/or receiving indication information of the second uplink time unit transmitted by the UE.

The method further includes: transmitting the indication information of the second downlink time unit and the indication information of the second uplink time unit to the core network device.

Transmitting the indication information of the second downlink time unit may refer to transmitting the indication information of the second downlink time unit to the UE; and receiving the indication information of the second uplink time unit may refer to receiving the indication information of the second uplink time unit transmitted by the UE.

In an embodiment, the second time interval information includes a sixth time difference.

The method further includes:
determining the sixth time difference based on a fourth time instant in a first downlink time unit transmitted to the UE and a sixth time instant in a third uplink time unit received from the UE.

The first downlink time unit is used to transmit the first target signal, and the third uplink time unit is an uplink time unit used to transmit the second target signal and with a transmission time instant closest to the first downlink time unit.

In an embodiment, the fourth time instant may be a time instant for the positioning node to transmit the first target signal in the first downlink time unit. The sixth time instant may be a time instant for the positioning node to receive the second target signal in the third uplink time unit.

In an embodiment, the method further includes:
transmitting indication information of the first downlink time unit to the UE, and/or receiving indication information of the third uplink time unit transmitted by the UE.

The method further includes:
transmitting the indication information of the first downlink time unit and the indication information of the third uplink time unit to the core network device.

Transmitting the indication information of the first downlink time unit may refer to transmitting the indication information of the first downlink time unit to the UE; and receiving the indication information of the third uplink time unit may refer to receiving the indication information of the third uplink time unit transmitted by the UE.

In an embodiment, the first target signal includes a PRS or a CSI-RS. The second target signal includes a SRS.

It should be noted that for descriptions of content that is repeated or corresponds to other embodiments, please refer to the relevant parts in the aforementioned UE-side embodiments (e.g., step S110), which will not be repeated here.

It should be noted that the technical features described in the aforementioned embodiments may be arbitrarily combined or reordered without conflict, to form new method technical solutions.

It should be noted that those skilled in the art will appreciate that the methods provided by embodiments of the present disclosure may be implemented independently, or may also be implemented in conjunction with some methods in embodiments of the present disclosure and other embodiments or some methods in the related art.

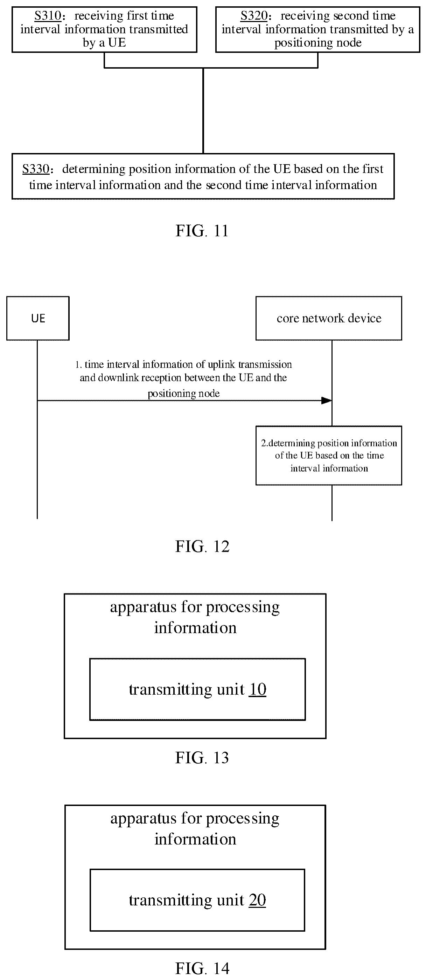

As shown in FIG. 11, embodiments of present disclosure provide a method for processing information, performed by a core network device. This method includes:
in step S310, receiving first time interval information transmitted by a UE;
in step S320, receiving second time interval information transmitted by a positioning node; and
in step S330, determining position information of the UE based on the first time interval information and the second time interval information.

In some embodiments, the time interval information includes a first time difference.

In an embodiment, the first time difference may indicate a time interval between a first time instant and a first uplink time unit. For example, the first time difference is determined based on a first time instant in a first downlink time unit received by the UE from the positioning node and a second time instant in a first uplink time unit transmitted by the UE. The first downlink time unit is used to transmit a first target signal; and the first uplink time unit is an uplink time unit with a transmission time instant closest to the first downlink time unit. The "closest to" may refer to "closest in time to", for example, time instants corresponding to time units are closest.

In an embodiment, the first time difference is a time difference between the first time instant and the second time instant.

In some embodiments, receiving the time interval information of uplink transmission and downlink reception between the UE and the positioning node includes:
receiving the first time difference and a second time difference.

The second time difference is used to indicate a time difference between a second downlink time unit for the UE to receive a downlink pilot and a second uplink time unit for the UE to transmit an uplink pilot.

In some embodiments, the second time difference is indicated by a numeric count of sub frames and/or a numeric count of slots.

In some embodiments, the downlink pilot includes a downlink PRS or a downlink CSI-RS; and/or the uplink pilot includes an uplink SRS.

In some embodiments, the method further includes:
indicating configuration information to the UE, in which the configuration information is used to determine a target set; and the second time difference is a target value in the target set.

In some embodiments, the configuration information includes indication information. The indication information is used to instruct the UE to determine the target value in the target set according to subcarrier spacing information.

In some embodiments, the time interval information includes a third time difference.

The third time difference is determined based on a first time instant in a first downlink time unit received by the UE from the positioning node and a third time instant in a third uplink time unit transmitted by the UE. The first downlink time unit is used to transmit a first target signal; and the third uplink time unit is an uplink time unit used to transmit a second target signal and with a transmission time instant closest to the first downlink time unit.

In an embodiment, the third time difference is a time difference between the first time instant and the third time instant.

In an embodiment, determining the position information of the UE based on the time interval information may include determining the position information of the UE through a manner such as multi-RTT based on the time interval information.

In an embodiment, the method further includes:
receiving indication information of the first downlink time unit and indication information of the first uplink time unit transmitted by the UE and/or the positioning node.

In an embodiment, the method may include: receiving a processing result corresponding to the indication information of the first downlink time unit and the indication information of the first uplink time unit transmitted by the UE and/or the positioning node; or determining a processing result based on the indication information of the first downlink time unit and the indication information of the first uplink time unit transmitted by the UE and/or the positioning node.

Step S330 may include determining the position information of the UE based on the first time interval information, the second time interval information and the processing result.

In an embodiment, the method further includes:
receiving indication information of the second downlink time unit and indication information of the second uplink time unit.

In an embodiment, the method may include: receiving a processing result corresponding to the indication information of the second downlink time unit and the indication information of the second uplink time unit transmitted by the UE and/or the positioning node; or determining a processing result based on the indication information of the second downlink time unit and the indication information of the second uplink time unit.

Step S330 may include determining the position information of the UE based on the first time interval information, the second time interval information and the processing result.

In an embodiment, the method further includes:
receiving indication information of the first downlink time unit and indication information of the third uplink time unit.

In an embodiment, the method may include: receiving a processing result corresponding to the indication information of the first downlink time unit and the indication information of the third uplink time unit; or determining a processing result based on the indication information of the first downlink time unit and the indication information of the third uplink time unit.

Step S330 may include determining the position information of the UE based on the first time interval information, the second time interval information and the processing result.

It should be noted that for descriptions of content that is repeated or corresponds to other embodiments, please refer to the relevant parts in the aforementioned UE-side embodiments and the positioning node-side embodiments (e.g., step S110 and step S210), which will not be repeated here.

It should be noted that the technical features described in the aforementioned embodiments may be arbitrarily combined or reordered without conflict, to form new method technical solutions.

It should be noted that those skilled in the art will appreciate that the methods provided by embodiments of the present disclosure may be implemented independently, or may also be implemented in conjunction with some methods in embodiments of the present disclosure and other embodiments or some methods in the related art.

As shown in FIG. 12, embodiments of the present disclosure provide a method for processing information, performed by an information processing system. The information processing system includes a UE, a positioning node, and a core network device. The method includes:
transmitting, by the UE to the core network device, first time interval information of uplink transmission and downlink reception between the UE and the positioning node;
transmitting, by the positioning node to the core network device, second time interval information of downlink transmission and uplink reception between the UE and the positioning node; and
receiving, by the core network device, the first time interval information and the second time interval information, and determining position information of the UE based on the first time interval information and the second time interval information.

It should be noted that for the steps performed by the UE in this embodiment, reference may be made to the aforementioned UE-side descriptions; for the steps performed by the positioning node, reference may be made to the aforementioned positioning node-side descriptions; and for the steps performed by the core network device, reference may be made to the aforementioned core network device-side description. These details will not be reiterated here.

Embodiments of present disclosure provide a method for processing information, which may include the following.

### Embodiment 1

In this embodiment, a terminal needs to report a receive (Rx)-transmit (Tx) time interval as well as an actual time interval.
1. The Rx-Tx time interval reported by the terminal is denoted as T_{UE-RX}-T_{UE-TX}.
   T_{UE-RX} is a time for a UE to receive a downlink time unit i from a positioning node, which is defined by a first detected time path.
   T_{UE-TX} is a transmission time of an uplink time unit j by the UE, and the uplink time unit j is closest in time to the downlink time unit i (e.g., a subframe i ) received from the positioning node.
2. The terminal reports an actual numeric count of subframes or slots between Rx and Tx.

The terminal reports an actual time interval between transmitting an uplink pilot (e.g., an UL-SRS) and receiving a downlink pilot (e.g., a DL-PRS), in which the time interval is an integer multiple of the subframe or an integer multiple of the slot.

A target set is determined based on configuration information received from a network side or is predefined, and the terminal determines a value from the target set to report to the network side. Furthermore, reference subcarrier spacing indication information may be either predefined or included in the configuration information received from the network side.

A location management function (LMF) obtains an actual Rx-Tx timing difference of the terminal to determine a round-trip time (RTT).

### Embodiment 2

In this embodiment, a terminal only reports a Rx-Tx time interval.

The Rx-Tx time interval reported by the terminal is denoted as T_{UE-RX}-T_{UE-TX}.

T_{UE-RX} is a time for a UE to receive a downlink time unit i from a positioning node, which is defined by a first detected time path.

T_{UE-TX} is a transmission time of an uplink time unit j by the UE, in which a SRS carried in the uplink time unit j (e.g., a subframe j) is closest in time to a downlink time unit i (e.g., a subframe i) received from the positioning node.

A location management function (LMF) obtains an actual Rx-Tx timing difference of the terminal to determine a round-trip time (RTT).

Embodiments of the present disclosure provide a system for processing information. This system includes a UE, a positioning node, and a core network device.

The UE is configured to perform one or more of the aforementioned UE-side technical solutions.

The positioning node is configured to perform one or more of the aforementioned positioning node-side technical solutions; and

The core network device is configured to perform one or more of the aforementioned core network device-side technical solutions.

In the embodiments of the present disclosure, for the steps performed by the UE and relevant content, reference may be made to the UE-side descriptions in the aforementioned embodiments; for the steps performed by the positioning node and relevant content, reference may be made to the positioning node-side descriptions in the aforementioned embodiments; and for the steps performed by the core network device and relevant content, reference may be made to the core network device-side descriptions in the aforementioned embodiments. These details will not be reiterated here.

As shown in FIG. 13, embodiments of present disclosure provide an apparatus for processing information, applied to a UE. The apparatus includes:

a transmitting unit 10, configured to transmit first time interval information of uplink transmission and downlink reception between the UE and a positioning node to a core network device, in which the first time interval information is used to determine position information of the UE.

In an embodiment, the first time interval information includes a first time difference.

The transmitting unit 10 is further configured to:
determine the first time difference based on a first time instant in a first downlink time unit received from the positioning node and a second time instant in a first uplink time unit transmitted to the positioning node.

The first downlink time unit is used to transmit a first target signal, and the first uplink time unit is an uplink time unit closest to the first downlink time unit.

In an embodiment, the first time interval information further includes a second time difference.

The transmitting unit 10 is further configured to:
determine the second time difference, in which the second time difference is a time difference between a second downlink time unit for receiving a downlink pilot and a second uplink time unit for transmitting an uplink pilot.

In an embodiment, the second time difference is indicated by a numeric count of subframes and/or a numeric count of slots.

In an embodiment, the downlink pilot includes a downlink positioning reference signal (PRS) or a channel state information-reference signal (CSI-RS); and the uplink pilot includes an uplink sounding reference signal (SRS).

In an embodiment, the transmitting unit 10 is configured to:
determine a target set according to a predefined rule or configuration information indicated by the core network device; and
determine a target value in the target set as the second time difference.

In an embodiment, the transmitting unit 10 is further configured to:
determine whether the predefined rule or the configuration information indicated by the core network device includes indication information; and
in response to the predefined rule or the configuration information including the indication information, determine the target value in the target set according to subcarrier spacing information.

In an embodiment, the transmitting unit 10 is further configured to:
receive indication information of the first downlink time unit transmitted by the positioning node, and/or transmit indication information of the first uplink time unit to the positioning node.

In an embodiment, the transmitting unit 10 is further configured to:
transmit the indication information of the first downlink time unit and the indication information of the first uplink time unit to the core network device.

In an embodiment, the first time interval information includes a third time difference.

The transmitting unit 10 is further configured to:
determine the third time difference based on a first time instant in a first downlink time unit received from the positioning node and a third time instant in a third uplink time unit transmitted by the UE.

The first downlink time unit is used to transmit a first target signal; and the third uplink time unit is a time unit used to transmit a second target signal and closest to the first downlink time unit.

In an embodiment, the first target signal includes a PRS or a CSI-RS. The second target signal includes an SRS.

As shown in FIG. 14, embodiments of present disclosure provide an apparatus for processing information, applied to a positioning node. The apparatus includes:
a transmitting unit 20 configured to transmit second time interval information of downlink transmission and uplink reception between the positioning node and a UE to a core network device, in which the second time interval information is used to determine position information of the UE.

In an embodiment, the second time interval information includes a fourth time difference.

The transmitting unit 20 is further configured to:
determine the fourth time difference based on a fourth time instant in a first downlink time unit transmitted to the UE and a fifth time instant in a first uplink time unit received from the UE.

The first uplink time unit is used to receive a second target signal; and the first downlink time unit is a downlink time unit closest to the first uplink time unit.

In an embodiment, the second time interval information further includes a fifth time difference.

The transmitting unit 20 is further configured to:
determine the fifth time difference, in which the fifth time difference is used to indicate a time difference between a second downlink time unit for transmitting a downlink pilot to the UE and a second uplink time unit for receiving an uplink pilot from the UE.

In an embodiment, the fifth time difference is indicated by a numeric count of sub frames and/or a numeric count of slots.

In an embodiment, the downlink pilot includes a downlink PRS or a downlink CSI-RS. The uplink pilot includes an uplink SRS.

In an embodiment, the transmitting unit 20 is configured to:
determine a target set according to a predefined rule or configuration information indicated by the core network device; and
determine a target value in the target set as the fifth time difference.

In an embodiment, the transmitting unit 20 is further configured to:
determine whether the predefined rule or the configuration information indicated by the core network device includes the indication information; and
in response to the predefined rule or the configuration information including the indication information, determine the target value in the target set according to subcarrier spacing information.

In an embodiment, the transmitting unit 20 is further configured to:
transmit indication information of the first downlink time unit to the UE, and/or receive indication information of the first uplink time unit transmitted by the UE.

In an embodiment, the transmitting unit 20 is further configured to:
transmit the indication information of the first downlink time unit and the indication information of the first uplink time unit to the core network device.

In an embodiment, the second time interval information includes a sixth time difference.

The transmitting unit 20 is further configured to:
determine the sixth time difference based on a fourth time instant in a first downlink time unit transmitted to the UE and a sixth time instant in a third uplink time unit received from the UE.

The first downlink time unit is used to receive a first target signal; and the third uplink time unit is a time unit used to receive a second target signal and closest to the first downlink time unit.

In an embodiment, the first target signal includes a PRS or a CSI-RS. The second target signal includes an SRS.

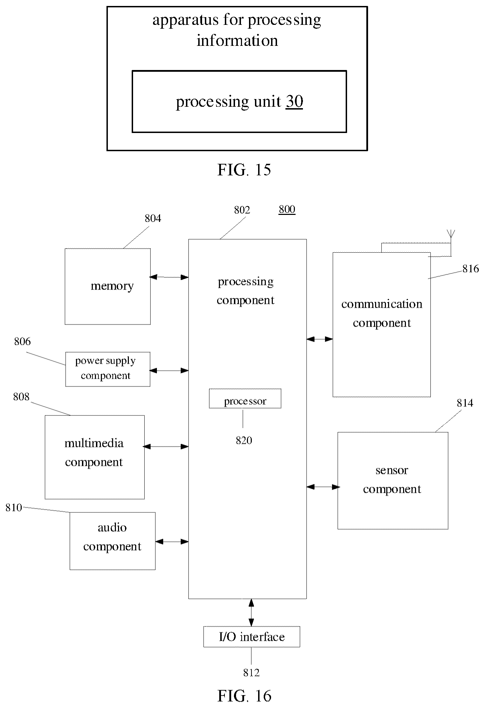

As shown in FIG. 15, embodiments of present disclosure provide an apparatus for processing information, applied to a core network device. The apparatus includes:
a processing unit 30 configured to receive first time interval information transmitted by a UE, receive second time interval information transmitted by a positioning node, and determine position information of the UE based on the first time interval information and the second time interval information.

In an embodiment, the first time interval information includes a first time difference.

The first time difference is determined based on a first time instant in a first downlink time unit received by the UE from the positioning node and a second time instant in a first uplink time unit transmitted by the UE to the positioning node, in which the first downlink time unit is used to receive a first target signal; and the first uplink time unit is an uplink time unit closest to the first downlink time unit.

In an embodiment, the second time interval information includes a fourth time difference.

The fourth time difference is determined based on a fourth time instant in a first downlink time unit transmitted by the positioning node to the UE and a fifth time instant in a first uplink time unit received by the positioning node from the UE.

In an embodiment, the first time interval information further includes a second time difference.

The second time difference is a time difference between a second downlink time unit for the UE to receive a downlink pilot and a second uplink time unit for the UE to transmit an uplink pilot.

In an embodiment, the second time interval information further includes a fifth time difference.

The fifth time difference is used to indicate a time difference between a second downlink time unit for the positioning node to transmit a downlink pilot and a second uplink time unit for receiving an uplink pilot.

In an embodiment, the processing unit 30 is further configured to:
indicate configuration information to the UE and/or the positioning node, in which the configuration information is used to determine a target set; and the second time difference and/or the fifth time difference is a target value in the target set.

In an embodiment, the configuration information includes indication information. The indication information is used to indicate the UE and/or the positioning node to determine the target value in the target set according to subcarrier spacing information.

In an embodiment, the processing unit 30 is further configured to:
receive indication information of the first downlink time unit and indication information of the first uplink time unit transmitted by the UE and/or the positioning node.

In an embodiment, the first time interval information includes a third time difference.

The third time difference is determined based on a first time instant in a first downlink time unit received by the UE from the positioning node and a third time instant in a third uplink time unit transmitted by the UE, in which the first downlink time unit is used to receive a first target signal, and the third uplink time unit is a time unit used to transmit a second target signal and closest to the first downlink time unit.

In an embodiment, the second time interval information includes a sixth time difference.

The sixth time difference is determined based on a fourth time instant in a first downlink time unit transmitted by the positioning node to the UE and a sixth time instant in a third uplink time unit received by the positioning node.

In the absence of conflicts, each step in an implementation or an embodiment may be implemented as an independent embodiment, and the steps may be combined in any manner. For example, a solution obtained by omitting certain steps from an implementation or an embodiment may also be implemented as an independent embodiment, and the order of steps in an implementation or an embodiment may be exchanged arbitrarily. In addition, optional configurations or optional examples in an implementation or an embodiment may be combined arbitrarily. Furthermore, different implementations or different embodiments may be combined arbitrarily. For example, some or all steps in different implementations or embodiments may be combined arbitrarily. An implementation or an embodiment may be combined arbitrarily with optional configurations or optional examples of other implementations or embodiments.

Embodiments of the present disclosure provide a communication device, including:
a memory configured to store processor-executable instructions; and
a processor connected to the memory.

The processor is configured to perform the methods for processing information provided in any of the aforementioned technical solutions.

The processor may include various types of storage media. These storage media are non-transitory computer-readable storage media capable of retaining information stored thereon after the communication device loses power.

The communication device includes a terminal, or a network element. This network element may be any one of the aforementioned first network element to fourth network element.

The processor may be connected to the memory via a bus or similar interface, and is configured to read executable programs stored in the memory, such as at least one of the methods shown in FIGS. 2 to 12.

FIG. 16 shows a block diagram of a terminal 800 according to an illustrative embodiment. For example, the terminal 800 may be a mobile phone, a computer, a digital broadcasting user device, a messaging device, a game console, a tablet device, a medical equipment, a fitness equipment, a personal digital assistant, etc.

Referring to FIG. 16, the terminal 800 may include one or more of the following components: a processing component 802, a memory 804, a power supply component 806, a multimedia component 808, an audio component 810, an input/output (I/O) interface 812, a sensor component 814, or a communication component 816.

The processing component 802 typically controls the overall operation of the terminal 800, such as the operation associated with display, telephone call, data communication, camera operation and/or recording operation. The processing component 802 may include one or more processors 820 to execute instructions to complete all or part of steps of the method described above. In addition, the processing component 802 may include one or more modules, to facilitate an interaction between the processing component 802 and other components. For example, the processing component 802 may include a multimedia module, to facilitate the interaction between the multimedia component 808 and the processing component 802.

The memory 804 is configured to store various types of data to support the operation of the terminal 800. Examples of these data include interactions for any applications or methods operated on the terminal 800, contact data, phonebook data, messages, images, videos, etc. The memory 804 may be implemented with any types of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or an optical disk.

The power supply component 806 provides power to various components of the terminal 800. The power supply component 806 may include a power management system, one or more power supplies, and other components associated with generating, managing, and distributing power for the terminal 800.

The multimedia component 808 includes a screen providing an output interface between the terminal 800 and a user. In some embodiments, the screen may include a liquid crystal display (LCD) and a touch panel (TP). If the screen includes the touch panel, the screen may be implemented as a touch screen, to receive an input signal from the user. The touch panel includes one or more touch sensors to sense touch, sliding, and a gesture on the touch panel. The touch sensor may not only sense the boundary of a touch or sliding swipe action, but also detect the duration and pressure associated with the touch or sliding action. In some embodiments, the multimedia component 808 includes a front-facing camera and/or a rear-facing camera. In a case where the terminal 800 is in an operating mode, such as a shooting mode or a video mode, the front-facing camera and/or the rear-facing camera may receive external multimedia data. Each front-facing camera and rear-facing camera may be a fixed optical lens system or have focal length and optical zoom capability.

The audio component 810 is configured to output and/or input an audio signal. For example, the audio component 810 includes a microphone (MIC), and the microphone is configured to receive external audio signals in the case that the terminal 800 is in the operation mode such as a call mode, a recording mode or a voice recognition mode. The received audio signal may be further stored in the memory 804 or be sent via the communication component 816. In some embodiments, the audio component 810 further includes a speaker for outputting the audio signal.

The I/O interface 812 provides an interface between the processing component 802 and a peripheral interface module, and the peripheral interface module may be a keyboard, a clicking wheel, a button and the like. These button may include but are not limited to: a home button, a volume button, a start button, or a lock button.

The sensor component 814 includes one or more sensors for providing condition assessment of various aspects for the terminal 800. For example, the sensor component 814 may detect the open and/or closed state of the terminal 800, the relative positioning of the components, for example, the component is a display screen and a keypad of the terminal 800, and the sensor component 814 may also detect changes in the position of the terminal 800 or a component of the terminal 800, the presence or absence of contact between the user and the terminal 800, the orientation or acceleration and/or deceleration of the terminal 800, and the temperature change of the terminal 800. The sensor component 814 may include a proximity sensor, configured to detect the presence of nearby objects without any physical contact. The sensor component 814 may further include an optical sensor, such as CMOS or CCD image sensors, for use in imaging applications. In some embodiments, the sensor component 814 may further include an acceleration sensor, a gyroscope sensor, a magnetic sensor, a pressure sensor, or a temperature sensor.

The communication component 816 is configured to facilitate wired or wireless communication between the terminal 800 and other apparatus. The terminal 800 may be connected to a wireless network which is based on a communication standard, such as Wi-Fi, 2G, 3G, or a combination thereof. In an embodiment, the communication component 816 receives broadcast signals or broadcast-related information from an external broadcast management system through a broadcast channel. In an illustrative embodiment, the communication component 816 also includes a near-field communication (NFC) module, to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the terminal 800 may be implemented by one or more application-specific integrated circuits (ASIC), digital signal processors (DSP), digital signal processing devices (DSPD), programmable logic devices (PLD), field-programmable gate arrays (FPGA), controllers, microcontrollers, microprocessors, or other electronic components for performing the above method.

In an illustrative embodiment, a non-temporary computer-readable storage medium including instructions is further provided, such as a memory 804 including instructions, and the processor 820 of the terminal 800 may execute the instructions to complete the above method. For example, the non-temporary computer-readable storage medium may be a ROM, a random access memory (RAM), a CD-ROM, a magnetic tape, a floppy disk, an optical data storage device, etc.

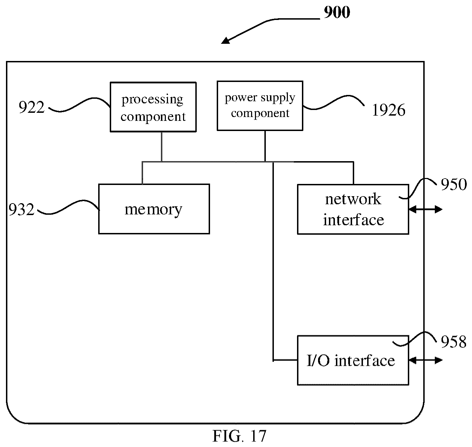

As shown in FIG. 17, a schematic diagram of a communication device 900 according to an embodiment of the present disclosure is shown. For example, the communication device 900 may be provided as a network node device. This communication device 900 may be the aforementioned base station.

Referring to FIG. 17, the communication device 900 includes a processing component 922, which further includes one or more processors, and memory resources represented by a memory 932, which are configured to store instructions executable by the processing component 922, for example, an application. The application stored in the memory 932 may include one or more modules each of which corresponds to a set of instructions. In addition, the processing component 922 is configured to execute instructions to perform any of the aforementioned methods applied to the base station, such as at least one of the methods shown in FIGS. 2 to 12.

The communication device 900 may further include one power supply component 926 configured to execute power management of the communication device 900, and one wired or wireless network interface 950 configured to connect the communication device 900 to a network, and one input/output(I/O) interface 958. The communication device 900 may operate based on an operating system stored in the memory 932, such as a Windows Server^{™}, a Mac OS X^{™}, a Unix^{™}, a Linux^{™}, a FreeBSD^{™}, or similar systems.

Other embodiments of the present disclosure will be apparent to those skilled in the art from consideration of the specification and practice of the invention disclosed here. The present disclosure is intended to cover any variations, uses, or adaptations of the present disclosure. These variations, usages, or adaptive changes follow the general principles of the present disclosure and include common knowledge or conventional technical means in this technical field not disclosed by the present disclosure. The specification and embodiments are merely considered to be illustrative, and the substantive scope and spirit of the present disclosure is limited only by the appended claims.

It should be understood that the present disclosure is not limited to the precise structure as described above and shown in the drawings, but may have various modification and alternations without departing from the scope of the present disclosure. The scope of the present disclosure is limited only by the appended claim.

## Claims

1. A method for processing information, performed by a user equipment (UE), comprising:
transmitting first time interval information of uplink transmission and downlink reception between the UE and a positioning node to a core network device, wherein the first time interval information is used to determine position information of the UE.

2. The method according to claim 1, wherein the first time interval information comprises a first time difference; and
the method further comprises:
determining the first time difference based on a first time instant in a first downlink time unit received from the positioning node and a second time instant in a first uplink time unit transmitted to the positioning node,
wherein the first downlink time unit is used to receive a first target signal, and the first uplink time unit is an uplink time unit closest to the first downlink time unit.

3. The method according to claim 2, wherein the first time interval information further comprises a second time difference; and
the method further comprises:
determining the second time difference, wherein the second time difference is used to indicate a time difference between a second downlink time unit for receiving a downlink pilot from the positioning node and a second uplink time unit for transmitting an uplink pilot to the positioning node.

4. The method according to claim 3, wherein the second time difference is indicated by a numeric count of sub frames and/or a numeric count of slots.

5. The method according to claim 3 or 4, wherein the downlink pilot comprises a downlink positioning reference signal (PRS) or a channel state information-reference signal (CSI-RS); and the uplink pilot comprises an uplink sounding reference signal (SRS).

6. The method according to any one of claims 3 to 5, wherein determining the second time difference comprises:
determining a target set according to a predefined rule or configuration information indicated by the core network device; and
determining a target value in the target set as the second time difference.

7. The method according to claim 6, further comprising:
determining whether the predefined rule or the configuration information indicated by the core network device includes indication information; and
in response to the predefined rule or the configuration information comprising the indication information, determining the target value in the target set according to subcarrier spacing information.

8. The method according to claim 2, further comprising:
receiving indication information of the first downlink time unit transmitted by the positioning node, and/or transmitting indication information of the first uplink time unit to the positioning node.

9. The method according to claim 8, wherein after receiving the indication information of the first downlink time unit transmitted by the positioning node, the method further comprises:
transmitting the indication information of the first downlink time unit and the indication information of the first uplink time unit to the core network device.

10. The method according to claim 1, wherein the first time interval information comprises a third time difference; and
the method further comprises:
determining the third time difference based on a first time instant in a first downlink time unit received from the positioning node and a third time instant in a third uplink time unit transmitted to the positioning node,
wherein the first downlink time unit is used to receive a first target signal; and the third uplink time unit is a time unit used to transmit a second target signal and closest to the first downlink time unit.

11. The method according to claim 10, wherein the first target signal comprises a PRS or a CSI-RS; and the second target signal comprises an SRS.

12. A method for processing information, performed by a positioning node, comprising:
transmitting second time interval information of downlink transmission and uplink reception between the positioning node and a UE to a core network device, wherein the second time interval information is used to determine position information of the UE.

13. The method according to claim 12, wherein the second time interval information comprises a fourth time difference; and
the method further comprises:
determining the fourth time difference based on a fourth time instant in a first downlink time unit transmitted to the UE and a fifth time instant in a first uplink time unit received from the UE,
wherein the first uplink time unit is used to receive a second target signal; and the first downlink time unit is a downlink time unit closest to the first uplink time unit.

14. The method according to claim 13, wherein the second time interval information further comprises a fifth time difference; and
the method further comprises:
determining the fifth time difference, wherein the fifth time difference is used to indicate a time difference between a second downlink time unit for transmitting a downlink pilot to the UE and a second uplink time unit for receiving an uplink pilot from the UE.

15. The method according to claim 14, wherein the fifth time difference is indicated by a numeric count of sub frames and/or a numeric count of slots.

16. The method according to claim 14 or 15, wherein the downlink pilot comprises a downlink PRS or a CSI-RS; and the uplink pilot comprises an uplink SRS.

17. The method according to any one of claims 14 to 16, wherein determining the fifth time difference comprises:
determining a target set according to a predefined rule or configuration information indicated by the core network device; and
determining a target value in the target set as the fifth time difference.

18. The method according to claim 17, further comprising:
determining whether the predefined rule or the configuration information indicated by the core network device includes indication information; and
in response to the predefined rule or the configuration information comprising the indication information, determining the target value in the target set according to subcarrier spacing information.

19. The method according to claim 13, further comprising:
transmitting indication information of the first downlink time unit to the UE, and/or receiving indication information of the first uplink time unit transmitted by the UE.

20. The method according to claim 19, wherein after receiving the indication information of the first uplink time unit transmitted by the UE, the method further comprises:
transmitting the indication information of the first downlink time unit and the indication information of the first uplink time unit to the core network device.

21. The method according to claim 12, wherein the second time interval information comprises a sixth time difference; and
the method further comprises:
determining the sixth time difference based on a fourth time instant in a first downlink time unit transmitted to the UE and a sixth time instant in a third uplink time unit received from the UE.
wherein the first downlink time unit is used to transmit a first target signal; and the third uplink time unit is a time unit used to receive a second target signal and closest to the first downlink time unit.

22. The method according to claim 21, wherein the first target signal comprises a PRS or a CSI-RS; and the second target signal comprises an SRS.

23. A method for processing information, performed by a core network device, comprising:
receiving first time interval information transmitted by a UE;
receiving second time interval information transmitted by a positioning node; and
determining position information of the UE based on the first time interval information and the second time interval information.

24. The method according to claim 23, wherein the first time interval information comprises a first time difference; and
the first time difference is determined based on a first time instant in a first downlink time unit received by the UE from the positioning node and a second time instant in a first uplink time unit transmitted by the UE to the positioning node, wherein the first downlink time unit is used to receive a first target signal; and the first uplink time unit is an uplink time unit closest to the first downlink time unit.

25. The method according to claim 23 or 24, wherein the second time interval information comprises a fourth time difference; and
the fourth time difference is determined based on a fourth time instant in a first downlink time unit transmitted by the positioning node to the UE and a fifth time instant in a first uplink time unit received by the positioning node from the UE, wherein the first uplink time unit is used to receive a second target signal; and the first downlink time unit is a downlink time unit closest to the first uplink time unit.

26. The method according to claim 24, wherein the first time interval information further comprises a second time difference; and
the second time difference is used to indicate a time difference between a second downlink time unit for the UE to receive a downlink pilot and a second uplink time unit for the UE to transmit an uplink pilot.

27. The method according to claim 25, wherein the second time interval information further comprises a fifth time difference; and
the fifth time difference is used to indicate a time difference between a second downlink time unit for the positioning node to transmit a downlink pilot to the UE and a second uplink time unit for the positioning node to receive an uplink pilot from the UE.

28. The method according to claim 26 or 27, further comprising:
indicating configuration information to the UE and/or the positioning node, wherein the configuration information is used to determine a target set; and the second time difference and/or the fifth time difference is a target value in the target set.

29. The method according to claim 28, wherein the configuration information comprises indication information; and the indication information is used to indicate the UE and/or the positioning node to determine the target value in the target set according to subcarrier spacing information.

30. The method according to claim 24, further comprising:
receiving indication information of the first downlink time unit and indication information of the first uplink time unit transmitted by the UE and/or the positioning node.

31. The method according to claim 23, wherein the first time interval information comprises a third time difference; and
the third time difference is determined based on a first time instant in a first downlink time unit received by the UE from the positioning node and a third time instant in a third uplink time unit transmitted by the UE, wherein the first downlink time unit is used to receive a first target signal; and the third uplink time unit is a time unit used to transmit a second target signal and closest to the first downlink time unit.

32. The method according to claim 23 or 31, wherein the second time interval information comprises a sixth time difference; and
the sixth time difference is determined based on a fourth time instant in a first downlink time unit transmitted by the positioning node to the UE and a sixth time instant in a third uplink time unit received by the positioning node.

33. A method for processing information, performed by an information processing system, wherein the information processing system comprises a UE, a positioning node, and a core network device, the method comprising:
transmitting, by the UE to the core network device, first time interval information of uplink transmission and downlink reception between the UE and the positioning node;
transmitting, by the positioning node to the core network device, second time interval information of downlink transmission and uplink reception between the UE and the positioning node; and
receiving, by the core network device, the first time interval information and the second time interval information, and determining position information of the UE based on the first time interval information and the second time interval information.

34. A system for processing information, comprising a UE, a positioning node, and a core network device,
wherein the UE is configured to perform the method according to any one of claims 1 to 11;
the positioning node is configured to perform the method according to any one of claims 12 to 22; and
the core network device is configured to perform the method according to any one of claims 23 to 32.

35. An apparatus for processing information, applied to a UE, comprising:
a transmitting unit, configured to transmit first time interval information of uplink transmission and downlink reception between the UE and a positioning node to a core network device, wherein the first time interval information is used to determine position information of the UE.

36. An apparatus for processing information, applied to a positioning node, comprising:
a transmitting unit, configured to transmit second time interval information of downlink transmission and uplink reception between the positioning node and a UE to a core network device, wherein the second time interval information is used to determine position information of the UE.

37. An apparatus for processing information, applied to a core network device, comprising:
a processing unit, configured to receive first time interval information transmitted by a UE, receive second time interval information transmitted by a positioning node, and determine position information of the UE based on the first time interval information and the second time interval information.

38. A communication device, comprising a processor, a memory, and an executable program stored in the memory and executable by the processor, wherein the processor executes the executable program to perform the method according to any one of claims 1 to 11, or the method according to any one of claims 12 to 22, or the method according to any one of claims 23 to 32.

39. A computer storage medium, storing an executable program, wherein a processor executes the executable program to implement the method according to any one of claims 1 to 11, or the method according to any one of claims 12 to 22, or the method according to any one of claims 23 to 32.
